# EUROPEAN PATENT SPECIFICATION

(11) **EP 2 789 385 B1**
(45) Date of publication and mention of the grant of the patent: **19.10.2016**
(21) Application number: 14159482.0
(22) Date of filing: 13.03.2014
(51) Int. Cl.: B01J 19/10, C10L 1/32

(54) **Apparatus and method for manufacturing a reformed fuel**
Vorrichtung und Verfahren zur Herstellung eines reformierten Kraftstoffs
Appareil et procédé de fabrication d'un combustible reformé

(30) Priority: 11.04.2013 KR 20130039848
(43) Date of publication of application: 15.10.2014
(73) Proprietor: Bio Hitech Energy Co., Chestnut Ridge, NY 10977 (US)
(72) Inventor: Koh, Chun Il, 139-2000 Seoul (KR); Hasegawa, Shinji, 104-0033 Tokyo (JP)
(74) Representative: Isarpatent

(56) References cited:
- WO-A1-01/62878
- JP-A- 2008 063 355
- JP-A- 2009 191 261
- JP-A- 2011 038 000
- KR-A- 20100 002 737

## Description

### FIELD OF THE INVENTION

The present disclosure relates to a method for manufacturing a reformed fuel.

### BACKGROUND OF THE INVENTION

Recently, exhaustion of fossil fuel and generation of green house gases are considered as worldwide problems.

In order to solve the problems, Japanese Patent Laid-open Publication No. 2011-038000 (titled "Fuel manufacturing method"), which was filed by the present inventor, discloses a method and apparatus for manufacturing an emersion fuel that can be atomized and features wide applicability and high stability. In this method and apparatus, water and an oil fuel such as diesel, kerosene or heavy oil are supplied into a space to which a magnetic force is applied. In that space, the water and the oil fuel are atomized and mixed with each other to thereby produce an emersion fuel.

In such a conventional fuel manufacturing method and apparatus, however, since the fuel is in the form of emersion, water-oil separation may occur and water component may be left. As a consequence, a flash point would be greatly increased, whereas a calorific power would be decreased, resulting in a failure to reduce the consumption of the fossil fuel greatly.

### BRIEF SUMMARY OF THE INVENTION

In view of the foregoing problems, the present disclose provides a method according to claim 1.

In accordance with an embodiment, wherein in the process of preparing the water, an enzyme capable of decomposing hydrogen peroxide is supplied into the water tank unit from an enzyme tank connected to the water tank unit.

In accordance with an embodiment, wherein in the process of preparing the water, the enzyme is catalase.

In accordance with the illustrative embodiment, the water is atomized by applying the ultrasonic wave or the electric field to the water tank unit, and hydrogen peroxide is decomposed by supplying the enzyme from the enzyme tank. Accordingly, the water and the oil are allowed to be easily mixed with each other without separated. Hence, it becomes possible to suppress problems of a fuel in the form of emersion, such as an increase of a flash point and a decrease of a calorific power. As a result, consumption of a fossil fuel can be greatly reduced.

### BRIEF DESCRIPTION OF THE DRAWINGS

The invention will be described in conjunction with the accompanying drawings. Understanding that these drawings depict only several embodiments in accordance with the disclosure and are, therefore, not to be intended to limit its scope, the disclosure will be described with specificity and detail through use of the accompanying drawings, in which:
Fig. 1 is a schematic piping diagram of a reformed fuel manufacturing apparatus;
Fig. 2(a) is a plan view of a reformed fuel manufacturing apparatus, and Fig. 2(b) is a front view thereof;
Fig. 3(a) is a plan view of a water tank and Fig. 3(b) is a front view of the water tank and pipelines connected thereto;
Fig. 4 (a) is a plan view of an oil tank and Fig. 4(b) is a front view of the oil tank and pipelines connected thereto;
Fig. 5(a) is a plan view of an enzyme tank and Fig. 5(b) is a front view thereof;
Fig. 6(a) is a plan view of a mixing tank and a combination chamber unit and Fig. 6(b) is a front view of the mixing tank and the combination chamber unit;
Fig. 7 illustrates a layout where storages are disposed in the vicinity of a reformed fuel manufacturing apparatus and

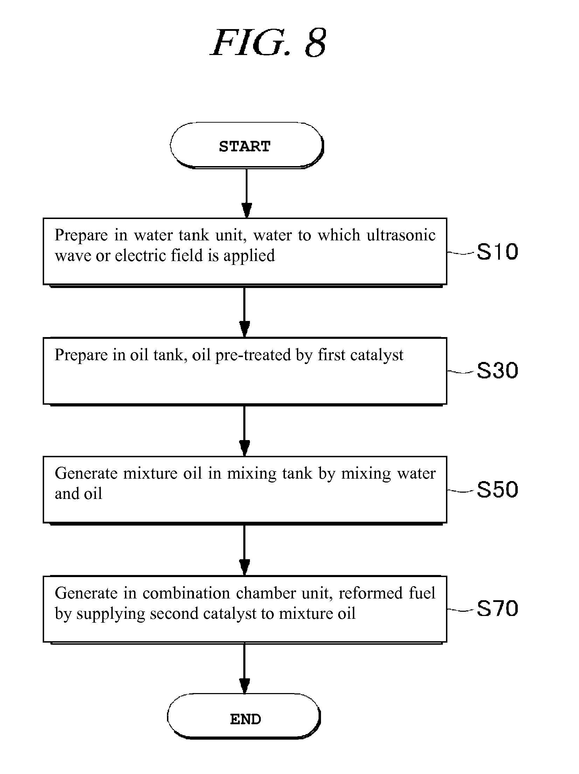

Fig. 8 is an overall flowchart of a reformed fuel manufacturing method in accordance with an illustrative embodiment.

### DETAILED DESCRIPTION OF THE INVENTION

Hereinafter, illustrative embodiments of the present disclosure will be described in detail with reference to the accompanying drawings so that inventive concept may be readily implemented by those skilled in the art. However, it is to be noted that the present disclosure is not limited to the illustrative embodiments but can be realized in various other ways. In the drawings, certain parts not directly relevant to the description are omitted to enhance the clarity of the drawings, and like reference numerals denote like parts throughout the whole document.

Throughout the whole document, the term "on" that is used to designate a position of one element with respect to another element includes both a case that the one element is adjacent to the another element and a case that any other element exists between these two elements.

Throughout the whole document, the term "comprises or includes" and/or "comprising or including" used in the document means that one or more other components, steps, operations, and/or the existence or addition of elements are not excluded in addition to the described components, steps, operations and/or elements. Further, the term "about or approximately" or "substantially" are intended to have meanings close to numerical values or ranges specified with an allowable error and intended to prevent accurate or absolute numerical values disclosed for understanding of the present disclosure from being illegally or unfairly used by any unconscionable third party. Through the whole document, the term "step of" does not mean "step for."

Hereinafter, illustrative embodiments will be described in detail.

A reformed fuel manufacturing apparatus 1 (hereinafter, simply referred to as a "present reformed fuel manufacturing apparatus 1") will be elaborated.

Though not specifically illustrated in the drawings, pipelines connecting respective components of the reformed fuel manufacturing apparatus 1 are implemented by typically used pipelines equipped with a pressure pump, valves, a flow meter, and so forth. Thus, description of such pipelines would be unnecessary for a person having ordinary skill in the art and thus will be omitted herein.

The reformed fuel manufacturing apparatus 1 includes a water tank unit 10.

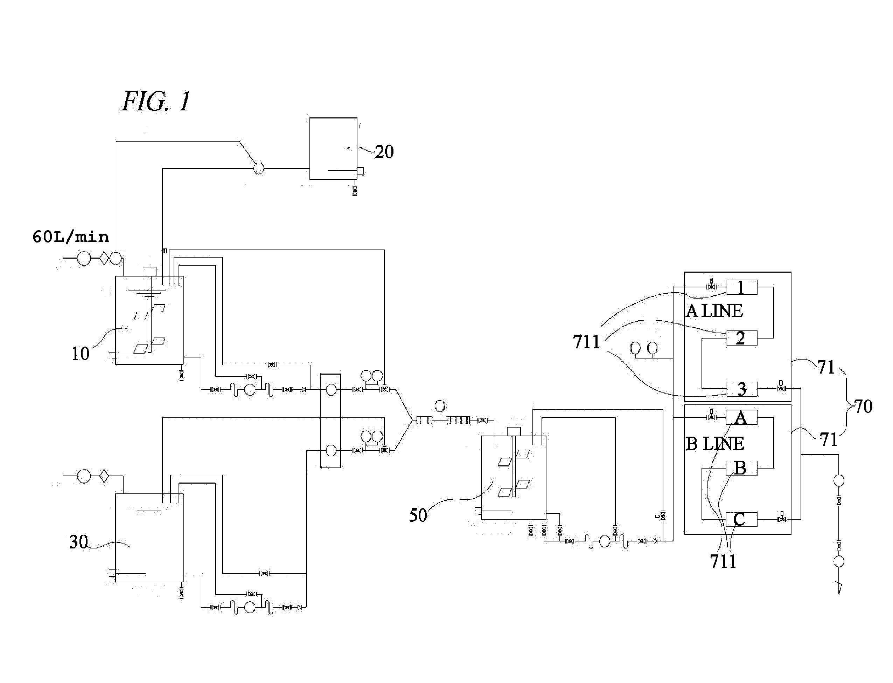

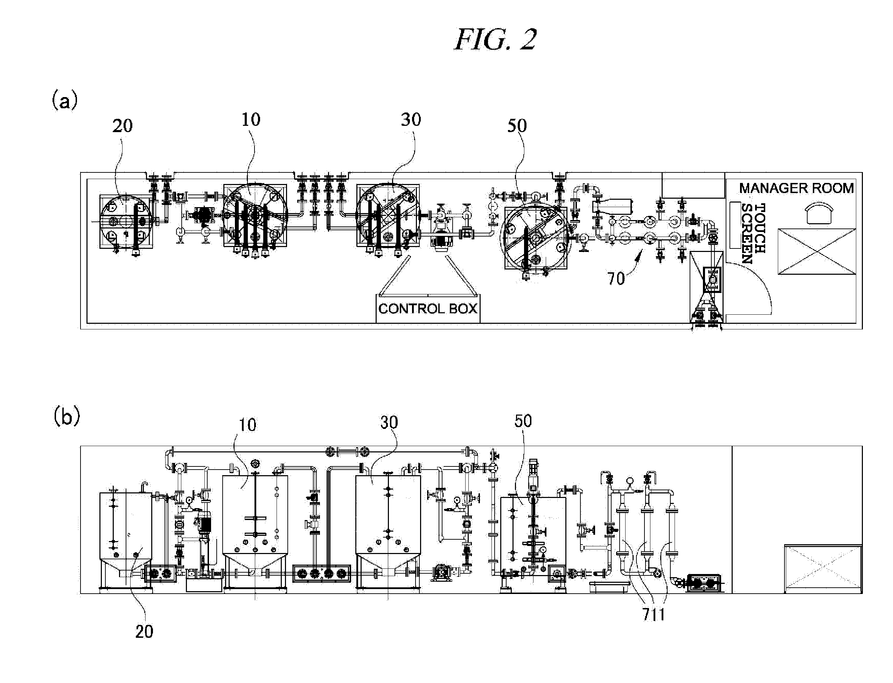

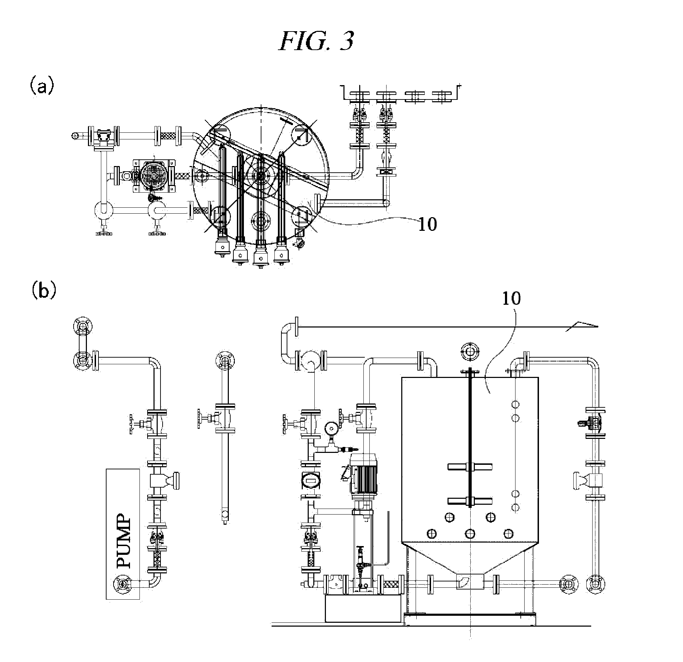

Referring to Figs. 1 to 3, the water tank unit 10 supplies water which is aerated and then to which an ultrasonic wave or an electric field is applied.

Here, the water flown out of the water tank unit 10 may be aerated in a place outside the water tank unit 10 and then introduced into the water tank unit 10 after an ultrasonic wave or an electric field is applied thereto.

Alternatively, the water flown out of the water tank 10 may be aerated within the water tank unit 10 and, then, an ultrasonic wave or an electric field may be applied thereto. At this time, the water tank unit 10 may include a water tank configured to perform a process of aerating the water.

The process of aerating the water is a process by which air is blown into water or water is sprayed into the air, thus allowing the water and a gas to come into contact with each other sufficiently. This process is performed to purify the water by facilitating oxidation and digestion by aerobic microorganism and eliminating a carbon dioxide gas, hydrogen sulfide, a methane gas, and so forth.

At this time, the air for use in aerating the water is reformed by a catalyst containing silicon dioxide, a silicate mineral and a halide mineral. Through this process, pH of the aerated water may be set to be in the range of, e.g., about 6.5 to about 7.5, and oxidation-reduction potential (ORP) of the aerated water may be set to range from, e.g., about 90 to about 100.

The catalyst for use in the reformation of the gas may be ceramic-processed, whereby it becomes possible to form a catalyst having microscopic size. Accordingly, the area of the catalyst that comes into contact with the gas can be enlarged, thus enabling to reform the gas rapidly. Here, the catalyst may be in the form of powder having a size of, e.g., about 1 µm or less.

The catalyst for use in the reformation of the gas is a mineral containing silicon dioxide, a silicate mineral and a halide mineral. For example, the catalyst may contain silica, alumina, magnesia, iron, and so forth.

Further, the water tank unit 10 further includes a magnetic force application chamber configured to apply an ultrasonic wave or an electric field to the aerated water.

An electric field or an ultrasonic wave is applied to the aerated water to pre-treat the water by using an original hydrodynamic reaction (OHR) technique. This OHR technique is for treating a liquid containing a gas, by which the gas and the liquid are made to pass through an ultrasonic wave or an electric field and thus split into microscopic particle groups instantly. As a result, mixture or reaction of the gas and the liquid with the water can be facilitated remarkably.

The water is mixed with oil in a subsequent process. Conventionally, emulsification of the water can be achieved by using a chemical agent referred to as an emulsifier. For such emulsification, however, a high pressure of about 300 Kgf/cm² (≒ 30 MPa) has been required.

When using the OHR technique, however, water and oil can be mixed sufficiently at a pressure equivalent to just about 1/100 of the conventionally required pressure level.

If a magnetic force is applied to the water which is aerated is applied by using the OHR technique, water molecules may be atomized (clustered) by the magnetic force. The water can be atomized to, e.g., about 50 µm or less.

Thus, even if no emulsifier is added in the subsequent process, the water and the oil can be easily mixed with each other highly uniformly at about 1 micron for about several seconds and at about 1/10 micron for about 1 minute. That is, water-oil separation of a reformed fuel can be prevented, and formation of a fuel in the form of emulsion can be avoided.

When an ultrasonic wave is applied to the water, the ultrasonic wave may be in the range of, e.g., about 20 kHz to about 40 kHz. When an electric field is applied to the water, the electric field may be generated at about 2000 V to about 4000 V.

Further, when the ultrasonic wave or the electric field is applied to the aerated water, the aerated water can be finely atomized at a high speed by adding a catalyst. The catalyst may be prepared by combining and mixing at least one of tourmaline, germanium and radium.

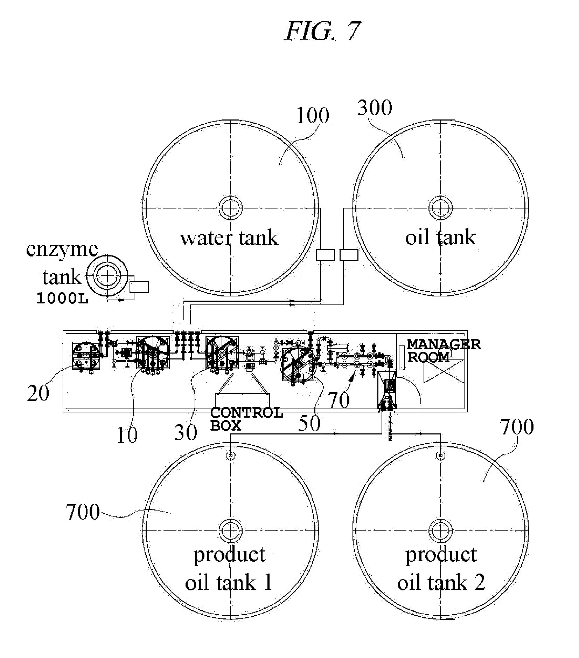

In order to be operated as stated above, the water tank unit 10 includes a water tank unit controller. The water tank unit controller may control the amount of water supplied into the water tank unit 10 from a water supply tank 100 (see Fig. 7). Further, the water tank unit controller may also control the amount of water flown out of the water tank unit 10 into a mixing tank 50.

The present reformed fuel manufacturing apparatus 1 may also include an enzyme tank 20 connected to the water tank unit 10.

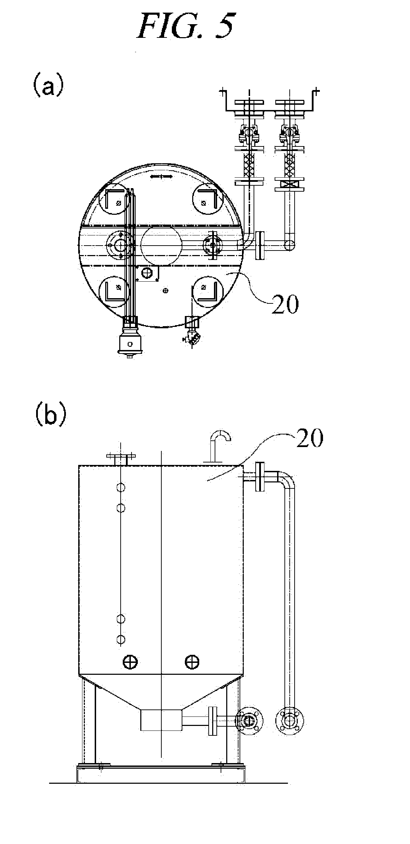

Referring to Figs. 1, 2 and 5, the enzyme tank 20 may be configured to supply an enzyme capable of decomposing hydrogen peroxide to the water tank unit 10. The enzyme tank 20 may be configured to supply the enzyme to the water tank 10 continuously.

At this time, the enzyme supplied from the enzyme tank 20 into the water tank unit 10 functions to decompose hydrogen peroxide, thus activating the water so as to be more easily mixed with the oil.

The enzyme tank 20 may be configured to supply the enzyme into the water tank unit 10 after the water is aerated in the water tank unit 10 and before the ultrasonic wave or electric field is applied to the aerated water.

The enzyme tank 20 may include an enzyme tank controller. The enzyme tank controller may control the amount of the enzyme supplied from the enzyme tank 20 into the water tank unit 10.

The enzyme supplied from the enzyme tank 20 to the water tank unit 10 may be catalase.

The catalase decomposes hydrogen peroxide to oxygen and water by catalyzing disproportionation of the hydrogen peroxide, thus eliminating the hydrogen peroxide. At this time, the catalase may act on the hydrogen peroxide about 40 million times per second. Accordingly, most of the hydrogen peroxide may be decomposed. Thus, water supplied from the water tank unit 10 can be activated so as to be more easily mixed with oil supplied from the oil tank 30.

Desirably, in order to prevent denaturation of the catalase, the inside of the enzyme tank 20 may be maintained at a pH of, e.g., approximately 7 and a temperature of, e.g., about 37°C or thereabout.

The present reformed fuel manufacturing apparatus 1 includes the oil tank 30.

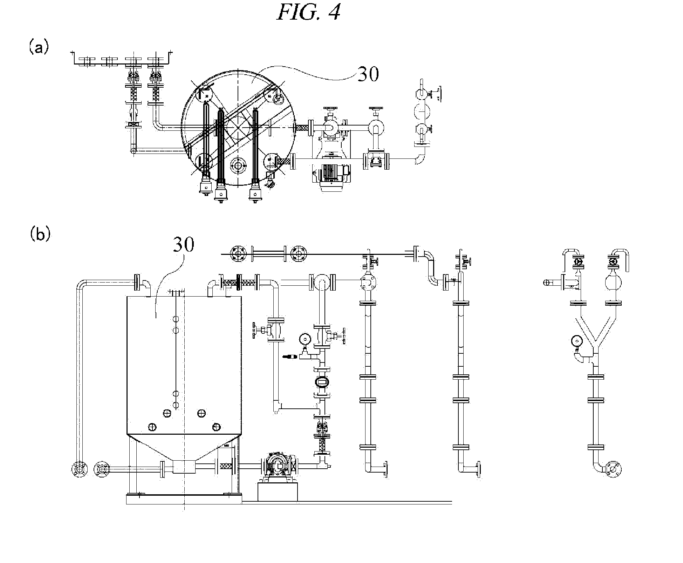

Referring to Figs. 1, 2 and 4, the oil tank 30 supplies oil pre-treated by a first catalyst. By way of non-limiting example, the pre-treated oil may be prepared by applying an ultrasonic wave or an electric field to oil.

Here, the oil supplied from the oil tank 30 may be pre-treated within the oil tank 30, or may be introduced into the oil tank 30 after pre-treated outside the oil tank 30.

The oil 30 supplied from the oil tank 30 may be fuel oil such as diesel or heavy oil. At this time, the temperature of the fuel oil such as diesel or heavy oil may be set to be in the range of, e.g., about 30°C to about 40°C.

As a result of pre-treating the oil by the first catalyst, the oil can be easily mixed with water in the mixing tank 50. The first catalyst used in the pretreatment of the oil may be selected from, but not limited to, tourmaline, germanium and radium or a combination of at least two of them. The first catalyst may be different from the catalyst used in the pre-treatment of the water.

The oil tank 30 may include an oil tank controller. The oil tank controller may control the amount of the oil supplied from an oil supplier tank 300 (see Fig. 7) into the oil tank 30. Further, the oil controller may also control the amount of oil supplied from the oil tank 30 into the mixing tank 50.

The present reformed fuel manufacturing apparatus 1 includes the mixing tank 50.

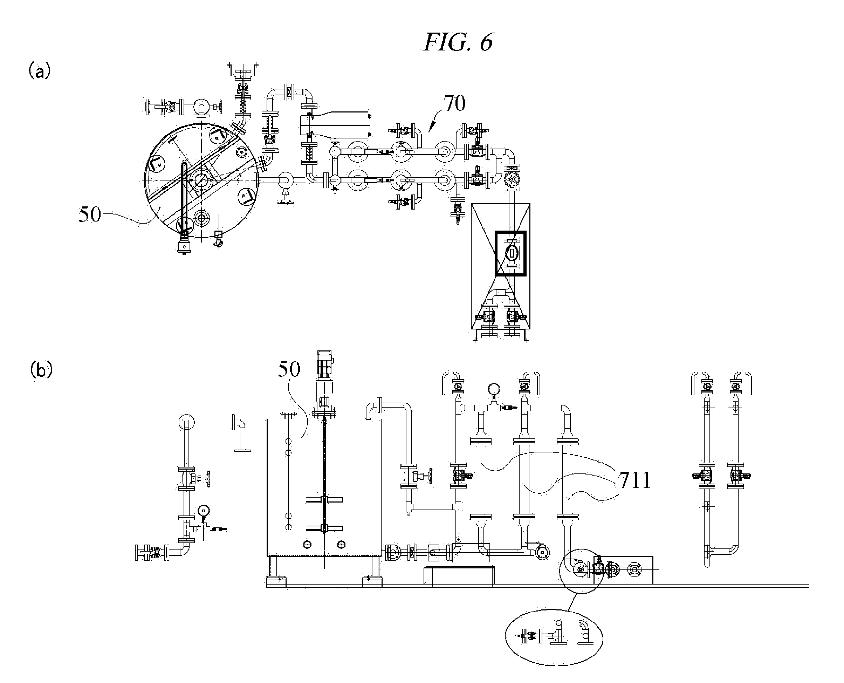

Referring to Figs. 1, 2 and 6, the mixing tank 50 is connected to the water tank unit 10 and the oil tank 30. Accordingly, the mixing tank 50 can receive the water from the water tank unit 10 and the oil from the oil tank unit 30.

In the mixing tank 50, the water and the oil can be agitated and mixed with each other uniformly without separated, so that mixture oil can be generated.

Referring to Fig. 1, a motor may be fastened to an upper portion of the mixing tank 50, and a blade configured to agitate the oil and the water may be connected to the motor. The blade may be rotated at, e.g., about 250 rpm so as to mix the oil and the water uniformly.

The mixing tank 50 may include a mixing tank controller. The mixing tank controller may control the amount of the mixture oil flown out of the mixing tank 50 into a combination chamber unit 70.

The present reformed fuel manufacturing apparatus 1 includes the combination chamber unit 70.

The combination chamber unit 70 generates a reformed fuel by supplying a second catalyst to the mixture oil flown from the mixing tank 50. Here, the combination chamber unit 70 may be connected to the outlet side of the mixing tank 50.

The second catalyst may be added to the combination chamber unit 70, and a pump pressure may also be applied to the combination chamber unit 70. Accordingly, just by passing through the combination chamber unit, the mixture oil can be converted to a reformed fuel which is not in the form of emulsion.

Referring to Fig. 1, the combination chamber unit 70 may include a combination chamber group 71 having a multiple number of combination chambers 711 through which the mixture oils flows sequentially.

In this configuration, as the mixture oil passes through the multiple number of combination chambers 71 in sequence, the mixed oil can be converted to more uniformly mixed reformed fuel.

Here, a pump pressure of, e.g., about 0.5 MPa may be applied to each combination chamber 711. Further, each combination chamber 711 may have the second catalyst.

By way of non-limiting example, the second catalyst may be a mixture of a transition metal and an alkaline earth metal or a mixture of a transition metal complex and an alkaline earth metal. In general, the transition metal has a high melting point and high strength. Some transition metals are always magnetic, and some of them, such as Fe and Ni, are ferromagnetic. Such a transition metal can form various types of ligands and complexes. For these reasons, the transition metal may be suitable for being used as the second catalyst.

Here, the transition metal may be, but not limited to, Mn, Fe, Ni, Cu, Zn, Zr, Ru or Rh. The second catalyst may be one of these transition metals or a combination of more than one of them, but not limited thereto.

The second catalysts supplied to the respective combination chambers 711 may be different from each other. By using such different kinds of catalysts, it may be possible to manufacture a reformed fuel having a more stable state and being atomized.

Further, there may be provided a multiple number of combination chamber groups 71, and these combination chamber groups 71 may be arranged in parallel to each other. With this configuration, by supplying the mixture oil to the respective combination chamber groups 71 at the same time, the reformed fuel manufacturing apparatus 1 can manufacture a great amount of reformed fuel at one time.

The reformed fuel manufactured by the reformed fuel manufacturing apparatus 1 may be stored in a reformed fuel storage tank 700, as illustrated in Fig. 7.

The reformed fuel manufacturing apparatus 1 in accordance with the illustrative embodiment has a simple structure as described above. Accordingly, the reformed fuel manufacturing apparatus 1 may be provided to correspond to a container standard transportable by a transportation vehicle. That is, the reformed fuel manufacturing apparatus 1 in accordance with the illustrative embodiment has mobility so as to be transported on a truck and thus can be easily carried to and located at a required place. By way of non-limiting example, the container may be, e.g., a 48-feet container.

Now, a reformed fuel manufacturing method in accordance with an illustrative embodiment (hereinafter, referred to as "the present reformed fuel manufacturing method") will be elaborated. Here, the same or similar parts as those described in the elaboration of the reformed fuel manufacturing apparatus in accordance with the illustrative embodiment will be assigned same reference numerals and briefly explained or redundant description thereof will be omitted.

The present reformed fuel manufacturing method includes a step S10 of preparing water to which an ultrasonic wave or an electric field is applied after the water is aerated.

An electric field or an ultrasonic wave may be applied to the aerated water to pre-treat the water by using an OHR technique.

This technique is for treating a liquid containing a gas, by which the gas and the liquid are made to pass through an ultrasonic wave or an electric field and thus split into microscopic particle groups instantly. As a result, mixture or reaction of the gas and the liquid with the water can be facilitated remarkably.

Accordingly, even if no emulsifier is added in the subsequent process, the water and oil can be well mixed with each other highly uniformly at about 1 micron for about several seconds and at about 1/10 micron for about 1 minute. That is, water-oil separation of the reformed fuel can be prevented, and formation of a fuel in the form of emulsion can be avoided.

In the step S10 of preparing the water, the water tank unit 10 may receive, from the enzyme tank 20 connected thereto, an enzyme capable to decomposing hydrogen peroxide.

Desirably, the enzyme supplied from the enzyme tank 20 to the water tank unit 10 may have a function of decomposing the hydrogen peroxide, thus activating the water so as to be more easily mixed with the oil.

In the step S10 of preparing the water, the water tank unit 10 may receive catalase from the enzyme tank 20. The catalase decomposes hydrogen peroxide to oxygen and water by catalyzing disproportionation of the hydrogen peroxide, thus eliminating the hydrogen peroxide.

In the step S10 of preparing the water, the water tank unit 10 may receive the enzyme from the enzyme tank 20 continuously.

In the step S10 of preparing the water, in the water tank unit 10, the water may be aerated with a gas reformed by a catalyst containing at least one of silicon dioxide, a silicate mineral and a halide mineral, and an ultrasonic wave or an electric field may be applied to the aerated water. Through this aeration process, the pH of the aerated water may be set to be in the range of, e.g., about 6.5 to about 7.5, and an oxidation-reduction potential (ORP) of the aerated water may be set to be in the range of, e.g., about 90 to about 100.

The step S10 of preparing the water may include aerating the water within the water tank. Here, the water tank may be included in the water tank unit 10.

Further, the step S10 of preparing the water may include applying an ultrasonic wave or an electric field to the aerated water within the magnetic force application chamber. The magnetic force application chamber may be included in the water tank unit 10.

The present reformed fuel manufacturing method includes a step S30 of preparing, in the oil tank 30, oil pre-treated by a first catalyst.

Here, the oil supplied from the oil tank 30 may be pre-treated within the oil tank 30 or may be introduced into the oil tank 30 after pre-treated outside the oil tank 30.

In the step S30 of preparing oil, the oil may be pre-treated by the first catalyst containing at least one of tourmaline, germanium and radium.

As the oil is pre-treated by the first catalyst, the oil can be easily mixed with the water in the mixing tank 50 later.

The present reformed fuel manufacturing method includes a step S50 of generating mixture oil by mixing the water supplied from the water tank 10 and the oil supplied from the oil tank 30.

Within the mixing tank 50, the water and the oil are agitated and mixed with each other uniformly without separated, so that mixture oil is generated.

Referring back to Fig. 1, a motor may be fastened to an upper portion of the mixing tank 50, and a blade configured to agitate the oil and the water may be connected to the motor. The blade may be rotated at, e.g., about 250 rpm so as to mix the oil and the water uniformly.

The present reformed fuel manufacturing method includes a step S70 of generating, in the combination chamber unit 70, a reformed fuel by supplying a second catalyst to the mixture oil introduced from the mixing tank 50.

The combination chamber unit 70 may be provided on the outlet side of the mixing tank 50.

A pump pressure may be applied to the combination chamber unit 70. Accordingly, just by passing through the combination chamber unit 70, the mixture oil can be converted to a reformed fuel which is not in the form of emulsion.

In the step S70 of generating the reformed fuel, the combination chamber unit 70 may include a combination chamber group 71 having a multiple number of combination chambers 711 through which the mixture oil flows sequentially.

In this configuration, as the mixture oil passes through the multiple number of combination chambers 71 in sequence, the mixture oil can be converted to more uniformly mixed reformed fuel. Besides, a generation rate of the reformed fuel may also be increased.

Here, there may be provided a multiple number of combination chamber groups 71, and these combination chamber groups 71 may be arranged in parallel to each other. With this configuration, by distributing and supplying the mixture oil to the respective combination chamber groups 71, a great mount of reformed fuel can be manufactured at one time.

In the step S70 of generating the reformed fuel, the second catalyst may contain a transition metal and an alkaline earth metal, or may contain a transition metal complex and an alkaline earth metal.

The transition metal may be, but not limited to, Mn, Fe, Ni, Cu, Zn, Zr, Ru or Rh. The second catalyst may be one of these transition metals or a combination of more than one of them, but not limited thereto.

In the present reformed fuel manufacturing apparatus 1, an ultrasonic wave or an electric field is applied to aerated water by using an OHR technique, and an enzyme such as catalase capable of activating the water is supplied into the water tank unit 10 from the enzyme tank 20. As a result, hydrogen peroxide in the water tank unit 10 can be decomposed and eliminated. Thus, even in case the content of water is equivalent to about 50% of the total amount of the mixture of water and oil at maximum, water component may not be detected from the generated reformed fuel. That is, the present reformed fuel manufacturing apparatus 1 allows the water and the oil to be easily mixed with each other, thus preventing the reformed fuel from being emulsified like an emulsion fuel.

That is, the present reformed fuel manufacturing apparatus 1 is capable of generating atomized reformed fuel having high stability and wide applicability. Thus, the reformed fuel manufactured by the present reformed fuel manufacturing apparatus 1 is capable of suppressing generation of nitrogen oxide (NOₓ), sulfur oxide (SOₓ), a particular matter (PM) and so forth that might be generated by combustion. As a consequence, the present reformed fuel manufacturing apparatus 1 may be capable of reducing environmental load that has been caused by exhaust gas.

Besides, the reformed fuel manufactured by the present reformed fuel manufacturing apparatus 1 does not have problems, such as water-oil separation, a great increase of a flash point and a decrease of a calorific power, which have been inevitably resulted from using a conventional emulsion fuel. Hence, consumption of a fossil fuel can be greatly reduced.

Furthermore, the present reformed fuel manufacturing apparatus 1 has a simple structure. Accordingly, the reformed fuel manufacturing apparatus 1 may be provided to correspond to a container standard that is transportable by a transportation vehicle. That is, the present reformed fuel manufacturing apparatus has mobility so as to be transported on a truck and thus can be easily carried to and located at a required place. By way of non-limiting example, the container may be, e.g., a 48-feet container.

## Claims

1. A method for manufacturing a reforming fuel, comprising:
preparing, in a water tank unit, water which is aerated and, then, to which an ultrasonic wave or an electric field is applied;
preparing, in an oil tank, oil pre-treated by a first catalyst;
generating, in a mixing tank, mixture oil by mixing the water introduced from the water tank unit and the oil introduced from the oil tank unit; and
generating, in a combination chamber unit, a reforming fuel by supplying a second catalyst to the mixture oil introduced from the mixing tank,
wherein in the process of preparing the oil, the oil is pre-treated by the first catalyst containing at least one of tourmaline, germanium and radium,
wherein in the process of generating the reforming fuel, the second catalyst contains a transition metal and an alkaline earth metal, or contains a transition metal complex and an alkaline earth metal, **characterized in that** in the process of preparing the water, the water tank unit aerates the water with air reformed by a third catalyst containing at least one of silicon dioxide, a silicate mineral and a halide mineral, and, then, applies the ultrasonic wave or the electric field to the aerated water.

2. The method of claim 1,
wherein in the process of preparing the water, an enzyme capable of decomposing hydrogen peroxide is supplied into the water tank unit from an enzyme tank connected to the water tank unit.

3. The method of claim 2,
wherein in the process of preparing the water, the enzyme is catalase.

4. The method of claim 1,
wherein the water tank unit comprises a water tank and a magnetic force application chamber, and
the process of preparing the water comprises:
aerating the water in the water tank; and
applying the ultrasonic wave or the electric field to the aerated water in the magnetic force application chamber.

5. The method of claim 1,
wherein in the process of generating the reforming fuel, the combination chamber unit comprises a combination chamber group having a multiple number of combination chambers through which the mixture oil is made to pass in sequence.

6. The method of claim 5,
Wherein in the process of generating the reforming fuel, the number of the combination chamber group is plural, and the plural combination chamber groups are arranged in parallel.

## Patentansprüche

1. Verfahren zum Herstellen eines reformierten Kraftstoffs, das Folgendes umfasst:
Vorbereiten, in einer Wassertankeinheit, von Wasser, das belüftet wird und an das anschließend eine Ultraschallwelle oder ein elektrisches Feld angelegt wird;
Vorbereiten, in einem Öltank, von Öl, das durch einen ersten Katalysator vorbehandelt wird;
Erzeugen, in einem Mischtank, von Mischöl durch Mischen des aus der Wassertankeinheit zugeleiteten Wassers und des aus der Öltankeinheit zugeleiteten Öls; und
Erzeugen, in einer Kombinationskammereinheit, eines reformierten Kraftstoffs durch Zugeben eines zweiten Katalysators zu dem aus dem Mischtank zugeleiteten Mischöl,
wobei das Öl, in dem Prozess des Vorbereitens des Öls, durch den ersten Katalysator vorbehandelt wird, der mindestens eines von Turmalin, Germanium und Radium enthält,
wobei in dem Prozess des Erzeugens des reformierten Kraftstoffs der zweite Katalysator ein Übergangsmetall und ein Erdalkalimetall enthält oder einen Übergangsmetallkomplex und ein Erdalkalimetall enthält, **dadurch gekennzeichnet, dass** in dem Prozess des Vorbereitens des Wassers die Wassertankeinheit das Wasser mit Luft belüftet, die durch einen dritten Katalysator reformiert wurde, der mindestens eines von Siliziumdioxid, einem Silikatmineral und einem Halogenidmineral enthält, und dann die Ultraschallwelle oder das elektrisches Feld an das belüftete Wasser anlegt.

2. Verfahren nach Anspruch 1,
wobei in dem Prozess des Vorbereitens des Wassers ein Enzym, das in der Lage ist, Wasserstoffperoxid zu zersetzen, aus einem mit der Wassertankeinheit verbundenen Enzymtank in die Wassertankeinheit geleitet wird.

3. Verfahren nach Anspruch 2,
wobei das Enzym in dem Prozess des Vorbereitens des Wassers Katalase ist.

4. Verfahren nach Anspruch 1,
wobei die Wassertankeinheit einen Wassertank und eine Magnetkraftanlegekammer umfasst, und der Prozess des Vorbereitens des Wassers Folgendes umfasst:
Belüften des Wassers in dem Wassertank; und
Anlegen der Ultraschallwelle oder des elektrischen Feldes an das belüftete Wasser in der Magnetkraftanlegekammer.

5. Verfahren nach Anspruch 1,
wobei in dem Prozess des Erzeugens des reformierten Kraftstoffs die Kombinationskammereinheit eine Kombinationskammergruppe umfasst, die mehrere Kombinationskammern aufweist, durch die man nacheinander das Mischöl fließen lässt.

6. Verfahren nach Anspruch 5,
wobei in dem Prozess des Erzeugens des reformierten Kraftstoffs mehrere Kombinationskammergruppen vorhanden sind, und die mehreren Kombinationskammergruppen parallel angeordnet sind.

## Revendications

1. Procédé de fabrication d'un combustible de reformage, comprenant les étapes consistant à :
préparer, dans une unité formant réservoir d'eau, de l'eau qui est aérée, à laquelle est ensuite appliqué(e) une onde ultrasonore ou un champ électrique ;
préparer, dans un réservoir d'huile, une huile prétraitée par un premier catalyseur ;
produire, dans un réservoir de mélange, une huile de mélange en mélangeant l'eau introduite à partir de l'unité formant réservoir d'eau et l'huile introduite à partir de l'unité formant réservoir d'huile ; et
produire, dans une unité formant chambre de combinaison, un combustible de reformage en introduisant un deuxième catalyseur dans l'huile de mélange introduite à partir du réservoir de mélange,
dans lequel, dans le processus de préparation de l'huile, l'huile est prétraitée par le premier catalyseur contenant au moins de la tourmaline ou du germanium ou encore du radium,
dans lequel, dans le processus de production du combustible de reformage, le deuxième catalyseur contient un métal de transition et un métal alcalino-terreux, ou contient un complexe métallique de transition et un métal alcalino-terreux,
**caractérisé en ce que** dans le processus de préparation de l'eau, l'unité formant réservoir d'eau aère l'eau avec de l'air reformé par un troisième catalyseur contenant au moins l'un parmi le dioxyde de silicium, un minéral silicaté et un halogénure minéral, puis applique l'onde ultrasonore ou le champ électrique à l'eau aérée.

2. Procédé selon la revendication 1,
dans lequel, dans le processus de préparation de l'eau, une enzyme apte à décomposer le peroxyde d'hydrogène est introduite dans l'unité formant réservoir d'eau à partir d'un réservoir d'enzymes relié à l'unité formant réservoir d'eau.

3. Procédé selon la revendication 2,
dans lequel, dans le processus de préparation de l'eau, l'enzyme est la catalase.

4. Procédé selon la revendication 1,
dans lequel l'unité formant réservoir d'eau comprend un réservoir d'eau et une chambre d'application d'une force magnétique, et
le processus de préparation de l'eau comprend :
l'aération de l'eau dans le réservoir d'eau; et
l'application de l'onde ultrasonore ou du champ électrique à l'eau aérée dans la chambre d'application d'une force magnétique.

5. Procédé selon la revendication 1,
dans lequel, dans le processus de production du combustible de reformage, l'unité formant chambre de combinaison comprend un groupe de chambres de combinaison comportant une pluralité de chambres de combinaison, à travers lesquelles il est fait en sorte de faire passer successivement l'huile de mélange.

6. Procédé selon la revendication 5,
dans lequel, dans le processus de production du combustible de reformage, les groupes de chambres de combinaison sont multiples et les multiples groupes de chambres de combinaison sont disposés en parallèle.
